# FASCICULE DE BREVET EUROPEEN

(11) **EP 1 026 438 B1**
(45) Date de publication et mention de la délivrance du brevet: **05.10.2005**
(21) Numéro de dépôt: 00400776.1
(22) Date de dépôt: 03.06.1996
(51) Int. Cl.: F17C 13/06

(54) **Capotage pour robinet de bouteille de gaz et bouteille de gaz équipée d'un tel ensemble robinet capoté**
Ventilkappe für Gasflasche und damit ausgerüstete Gasflasche
Valve cap for gas bottle and gas bottle equipped therewith

(30) Priorité: 08.06.1995 FR 9506784
(43) Date de publication de la demande: 09.08.2000
(62) Demande divisionnaire de: 96401179.5
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Arzenton, Marco, 37135 Verone (IT); Beaco, Bruno, 37135 Verone (IT); Cannet, Gilles, 95620 Parmain (FR); Lasnier, Didier, 75321 PARIS CEDEX 07 (FR); Pisot, Philippe, 95290 L'Isle Adam (FR); Thouvier, Stéphane, 95100 ARGENTEUIL (FR)
(74) Mandataire: Le Moenner, Gabriel

(56) Documents cités:
- EP-A- 0 275 242
- EP-A- 0 629 812
- WO-A-82/01580
- US-A- 4 103 806

## Description

La présente invention concerne les bouteilles de gaz sous pression équipées d'un robinet/détendeur disposé dans un chapeau de protection.

Le document US-A-4 103 806 décrit une bouteille d'air de plongée comprenant un capotage, comprenant une zone de base cylindrique s'étendant le long du fût de la bouteille et serrée par friction sur ce dernier, et une zone supérieure cylindrique prolongeant la zone de base.

Les bouteilles de gaz sous pression sont en effet équipées classiquement d'un robinet disposé dans un chapeau de protection donnant accès au robinet, comme décrit par exemple dans les documents EP-A-0 275 242 et EP-A-629 812 et FR-A-2 706 051 dont il y est fait référence.

La présente invention a pour objet de proposer une bouteille de gaz équipée de capotage perfectionné permettant l'intégration d'ensembles de robinet/détendeur perfectionnés, offrant une ergonomie, notamment de manutention, et une sécurité accrues et convenant à de nombreuses applications, notamment dans le domaine du soudage.

Pour ce faire, l'invention propose une bouteille de gaz équipée selon la revendication 1.

D'autres caractéristiques et les avantages de la présente invention ressortiront de la description suivante de modes de réalisation donnés à titre illustratif mais nullement limitatif, faite en relation avec les dessins annexés, sur lesquels :
- la figure 1 est une vue en perspective d'un ensemble robinet/détendeur en place dans un mode de réalisation d'un capotage selon l'invention, figuré en lignes fantômes ;
- la figure 2 est une vue schématique du dessus de l'ensemble capoté de la figure 1 ;
- la figure 3 est une vue partiellement en coupe suivant la ligne de coupe en III-III de l'ensemble de la figure 2 monté en position sur une bouteille de gaz ;

Selon une caractéristique particulière de l'invention, l'ensemble robinet/détendeur est totalement logé dans le capotage qui comporte des lumières d'accès aux différentes entrées et sorties de l'ensemble.

La présente invention a enfin pour objet une bouteille de gaz sous pression équipée d'un ensemble tel que défini ci-dessus.

D'autres caractéristiques et les avantages de la présente invention ressortiront de la description suivante de modes de réalisation donnés à titre illustratif mais nullement limitatif, faite en relation avec les dessins annexés, sur lesquels :

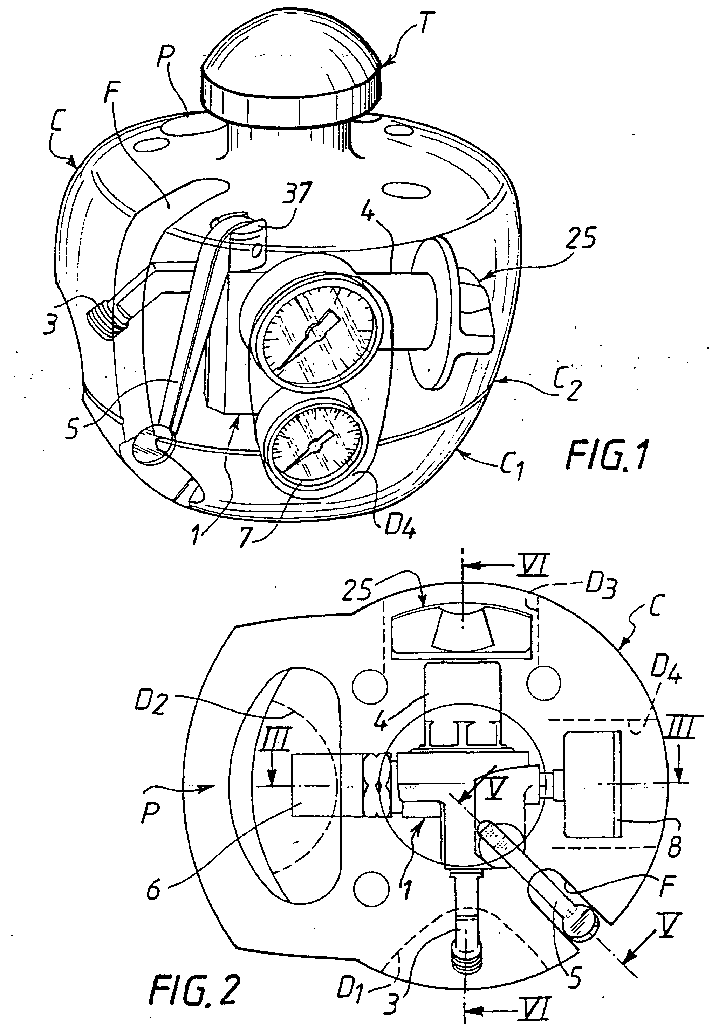

- la figure 1 est une vue en perspective d'un ensemble selon l'invention en place dans un capotage figuré en lignes fantômes ;
- la figure 2 est une vue schématique du dessus de l'ensemble capoté de la figure 1 ;

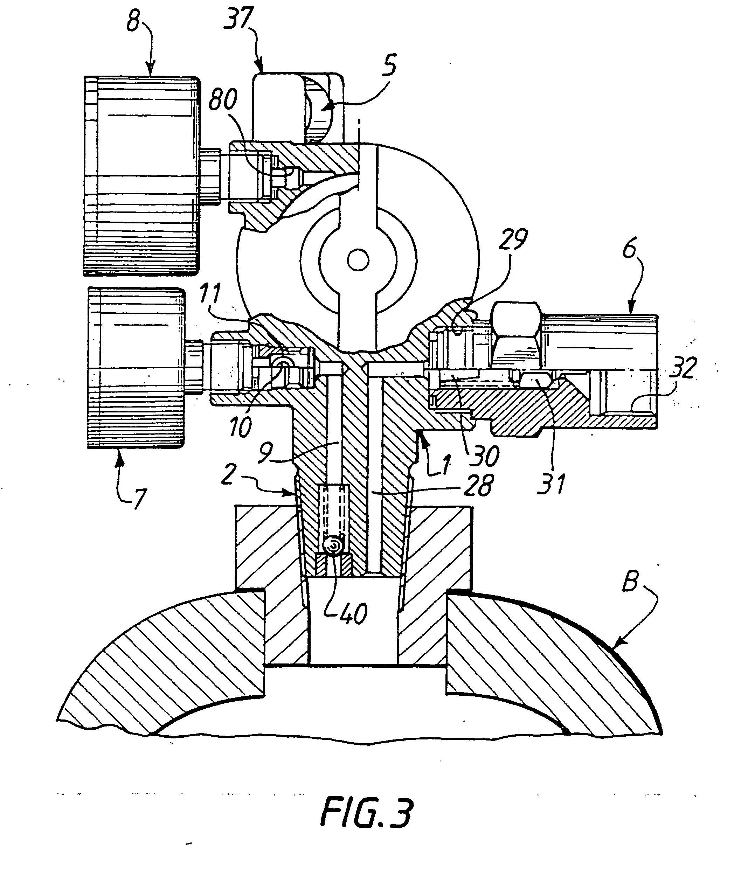

- la figure 3 est une vue partiellement en coupe suivant la ligne de coupe en III-III de l'ensemble de la figure 2 monté en position sur une bouteille de gaz ;

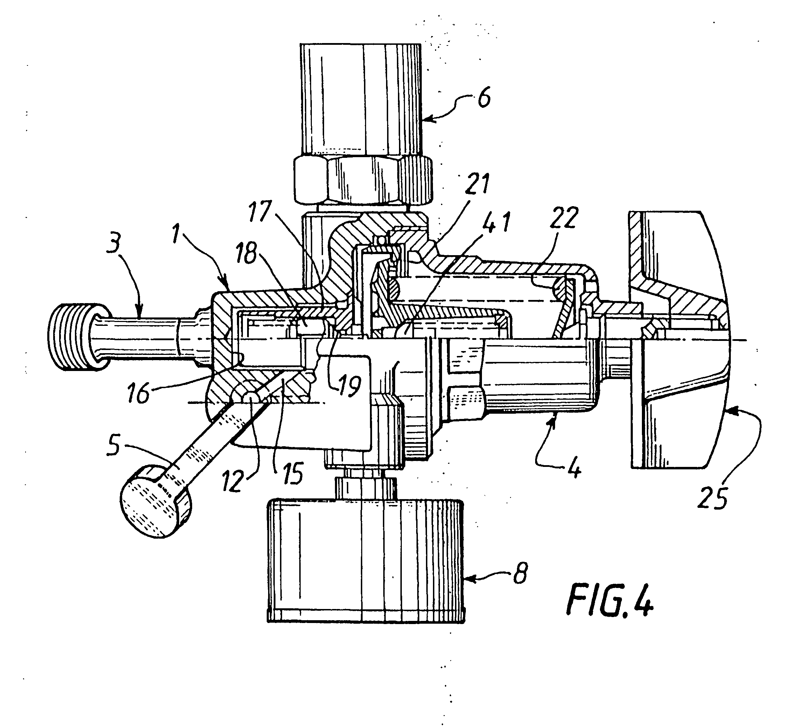

- la figure 4 est une vue du dessus, partiellement en coupe longitudinale, de l'ensemble de la figure 2 ;

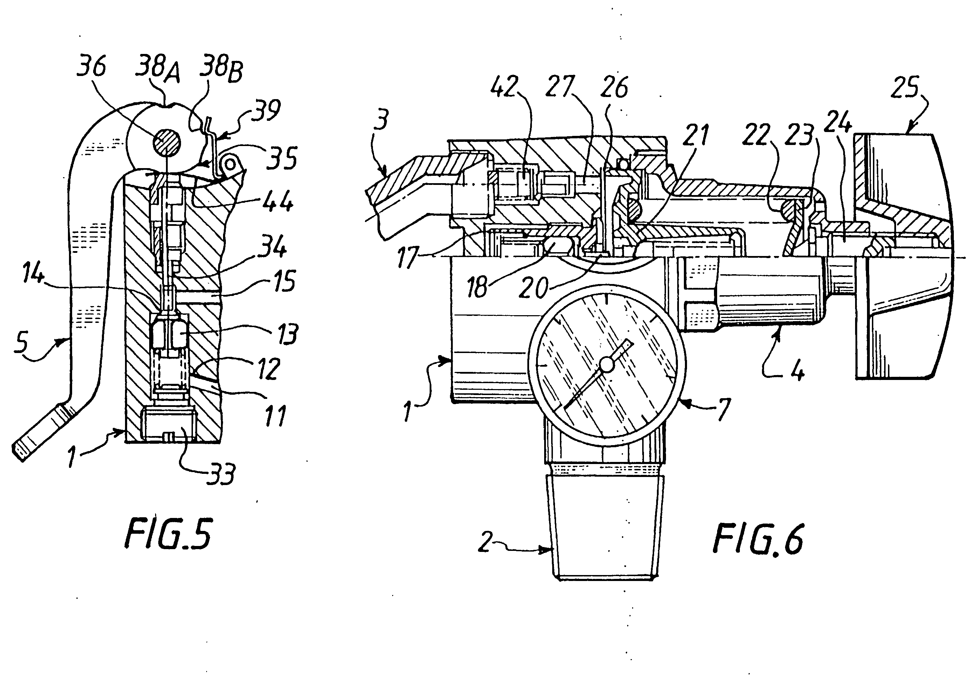

- la figure 5 est une vue de détail, partiellement en coupe suivant la ligne de coupe V-V de la figure 2 ;
- la figure 6 est une vue de côté, partiellement en coupe selon la ligne de coupe VI-VI de la figure 2 ; et

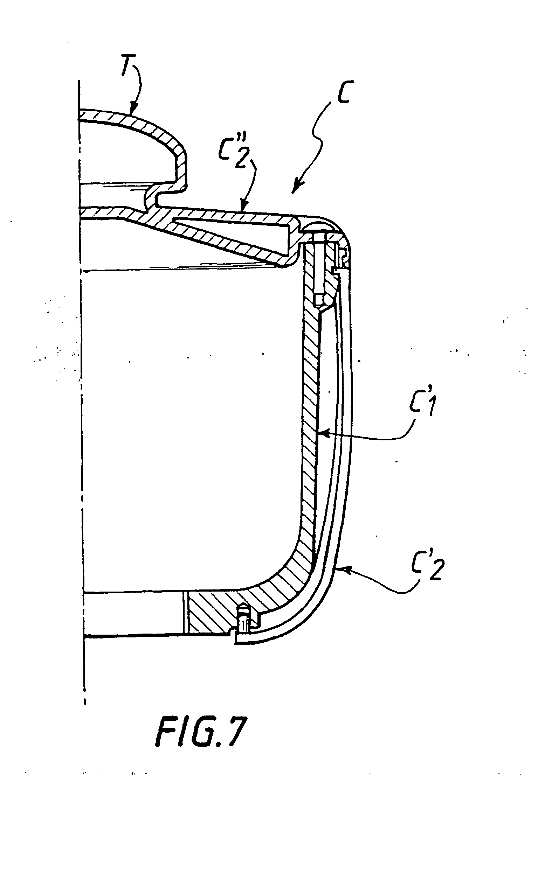

- la figure 7 est une demi-coupe longitudinale d'une variante de réalisation d'un capotage de robinet selon l'invention.

Sur les dessins, on reconnait un ensemble compact robinet/détendeur composé essentiellement d'un corps métallique 1 comportant une extrémité inférieure profilée formant embase de montage 2 et sur lequel sont rapportés, comme on le verra en détail plus avant, un raccord de sortie 3, un boîtier de détendeur 4, un levier de commande 5, un raccord de remplissage 6, un manomètre haute pression 7 et un manomètre basse pression 8.

Comme on le voit mieux sur les figures 3 à 6, le corps 1, réalisé par exemple en laiton, définit intérieurement un circuit d'utilisation constitué d'une portion de circuit haute pression comprenant : une partie amont 9 s'étendant dans l'embase 2, sensiblement parallèlement à l'axe de cette dernière, et débouchant dans un passage transversal 10 servant au montage du manomètre HP 7 et communiquant lui-même avec un passage transversal 11 débouchant lui-même dans un alésage étagé 12 recevant le clapet d'isolation 13 et formant un siège 14 pour ce dernier ; la portion de circuit en aval du siège 14 de l'alésage étagé 12 communique, par un passage transversal 15, avec une chambre cylindrique étagée 16 ouvrant vers l'extérieur du corps 1 par une ouverture de diamètre élargi dans laquelle est montée l'extrémité annulaire du boîtier de détendeur 4. On notera que, étant en communication permanente avec le volume de stockage dans la bouteille B, le manomètre HP 7 assure également la fonction de jauge de remplissage de la bouteille. Dans la partie de diamètre réduit de la chambre 16 est montée un sous-ensemble unitaire comprenant une cage tubulaire 17 abritant un clapet de régulation 18 et formant un siège 19 pour ce dernier. Le clapet 18 comporte une portion de tige avant 20 s'étendant au-delà du siège 19 et susceptible de coopérer avec la face avant d'un piston de détendeur 21 coulissant dans le corps 1 et le boîtier 4 en étant sollicité dans la direction vers la cage 17 par un ressort 22 prenant appui arrière sur une coupelle 23 et dont la force est réglable par déplacement de la coupelle 23 au moyen d'une tige filetée 24 montée dans le boîtier 4 et actionnable manuellement par un bouton ou un volant de réglage 25. L'axe du clapet 18 et du piston de détendeur 21 est sensiblement orthogonal à l'axe de l'embase de montage 2. La chambre basse pression 26 en avant du piston 21 débouche vers l'extérieur du corps 1, à l'opposé du bouton 25 du détendeur, par un passage de sortie 27 qui s'étend dans le corps 1 parallèlement à l'axe du clapet 18 et du piston 21 au voisinage de l'extrémité supérieure de ce dernier, et dans lequel est monté le raccord de sortie 3, et par un passage transversal 80, orthogonal au passage de sortie 27, sensiblement à l'aplomb du passage 11, et dans lequel est monté le manomètre BP 8 disposé ainsi dans l'alignement vertical du manomètre HP 7.

Comme on le voit sur la figure 3, le corps 1 définit également un circuit de remplissage de bouteille, complètement indépendant du circuit de distribution décrit ci-dessus et comportant une partie aval 28 s'étendant dans l'embase 2, parallèlement à l'axe de cette dernière, et communiquant avec un passage transversal amont 29 dans lequel est monté le raccord de remplissage 6, à l'opposé des manomètres 7 et 8 et sensiblement dans l'alignement du manomètre HP 8.Le raccord 6 forme un passage intérieur profilé pour loger, en aval, un filtre 30, en zone intermédiaire, un clapet anti-retour 31 sollicité par un ressort et se terminant par une ouverture d'entrée 32 agencée pour recevoir l'extrémité, par exemple mâle, d'une ligne de remplissage, cette extrémité mâle repoussant le clapet 31 pour donner un libre accès au fluide haute pression de remplissage vers l'intérieur de la bouteille par le passage 28.

Comme on le voit sur la figure 5, le clapet d'isolation 13, sollicité vers son siège 14 par un ressort prenant appui sur un bouchon 33 fermant l'alésage 12, comporte à son extrémité avant un doigt faisant saillie au-delà du siège 14 et coopérant en appui avec une tige 34 traversant une garniture d'étanchéité et comportant une extrémité extérieure émergeant hors du bloc 1 pour coopérer avec une surface de came 35 de la tête d'articulation du levier 5 tourillonnant autour d'un axe transversal 36 dans une protubérance 37 à l'extrémité supérieure du corps 1 sensiblement entre les manomètres 7, 8 et le raccord de sortie 3. La tête du levier 5 comprend au moins deux encoches 38A, 38B coopérant avec un ressort-lame 39 monté sur le corps 1 pour maintenir le levier 5 dans l'une ou l'autre de ses positions extrêmes d'ouverture ou de fermeture, en le rendant ainsi pratiquement insensible aux vibrations. Avantageusement, une couche de matériau à faible coefficient de friction, voire autolubrifié, est disposée à l'interface entre la surface de came 35 et le capuchon de la tige 34, par exemple en interposant entre ces derniers une lame en polyimide solidarisée, au moins lors du montage, à la lame 39.

Comme représenté sur les dessins, l'ensemble selon l'invention comprend en outre avantageusement un clapet de retenue de pression 40 dans l'extrémité amont du passage 9 dans l'embase 2, un clapet de surpression 41 dans le piston de détendeur 21 et un clapet anti-retour 42 dans le passage de sortie 27, ainsi qu'un filtre en amont du passage 11 et en bout de la cage 17, respectivement.

Comme on le voit bien sur les dessins, la configuration ramassée de l'ensemble robinet/détendeur, avec des organes actifs répartis sur la totalité des faces du bloc 1, permet d'intégrer totalement l'ensemble dans un capotage formant chapeau de bouteille C, dont les contours d'un mode de réalisation particulier sont représentés sur les figures 1 et 2. Dans ce mode de réalisation, le capotage/chapeau C est constitué essentiellement d'une base C₁ montée sur le col de la bouteille B autour de l'embase 2 et sur laquelle est fixée, typiquement par des tirants verticaux, une partie supérieure C₂ en forme de coque abritant l'essentiel du robinet/détendeur et comprenant une partie latérale formant poignée P et une tête supérieure T en forme de pommeau permettant la manutention de la bouteille, notamment par roulage sur le sol. Les parois latérales de la partie supérieure C₂ comportent un certain nombre de découpes ou d'évidements D₁-D₄, comme représenté schématiquement sur la figure 2, pour permettre l'accès aux raccords 3 et 6, au bouton 25 et aux manomètres 7 et 8. Les parties C₂ et C₁ comportent en outre une fente longitudinale F permettant le libre débattement entre ses positions d'ouverture et de fermeture, du levier 5 qui est normalement abrité, en position de fermeture, dans le capotage C, comme on le voit sur la figure 1. On pourra également prévoir avantageusement, vers le bas de la fente F, le montage d'un dispositif de sécurité inviolable, par exemple du type à arrachement, garantissant que le levier 5 n'a pas été actionné avant la première mise en service d'une bouteille pleine équipée de l'ensemble robinet/détendeur selon l'invention. Au moins la partie supérieure C₂ du capotage C peut être réalisée en un matériau plastique technique. Au moins la partie inférieure C₁ peut être réalisée en alliage léger métallique ou en fonte malléable. En variante, comme représenté schématiquement sur la figure 7, le capotage/chapeau est constitué d'une cage ou tulipe intérieure ajourée C'₁, typiquement en fonte malléable, fixée sur la collerette de la bouteille, autour de l'embase du robinet, et s'étendant vers le haut de façon à enclore l'ensemble robinet/détendeur avec ses manomètres, et d'éléments de capotage externes périphériques et supérieurs C'₂, C"₂ en matériau plastique, fixés sur la cage C'₁.

Quoique la présente invention ait été décrite en relation avec des modes de réalisation particuliers, elle ne s'en trouve pas limitée pour autant mais est au contraire susceptible de modifications et de variantes qui apparaîtront à l'homme de l'art.

## Revendications

1. Bouteille de gaz équipée d'un robinet/détendeur définissant un circuit de gaz comportant, en série, une portion de circuit basse pression et une portion de circuit haute pression, formé dans un corps comportant une embase (2) montée sur le col de bouteille, et d'un capotage de robinet comprenant une zone de base (C₁) montée sur le col de bouteille (13), autour de l'embase (2) du robinet, et une zone supérieure en forme de coque (C₂) abritant le robinet / détendeur et comportant au moins deux lumières latérales d'accès au robinet/détendeur et formant un pommeau central (T) de manutention.

2. Bouteille équipée selon la revendication 1, **caractérisée en ce que** la zone supérieure (C₂) du capotage comporte une partie latérale formant une poignée (P).

3. Bouteille équipée selon l'une des revendications 1 et 2 **caractérisée en ce que** le capotage comporte au moins une lumière latérale donnant accès à un manomètre (7,8) du robinet/détendeur.

4. Bouteille équipée selon l'une des revendications précédentes, **caractérisée en ce que** le capotage est réalisé en au moins deux parties assemblées par des moyens de vis.

5. Bouteille équipée selon la revendication 4, **caractérisée en ce qu'**au moins une des parties du capotage est en matériau plastique.

6. Bouteille équipée selon l'une des revendications précédentes, **caractérisée en ce que** le capotage comporte une fente (F) recevant un levier (5) d'actionnement de clapet du robinet/détendeur.

## Patentansprüche

1. Gasflasche, ausgerüstet mit einem Hahn/Druckminderventil, der bzw. das einen Gaskreislauf definiert, der in Reihe einen Niederdruckkreislaufteil und einen Hochdruckkreislaufteil enthält und in einem Gehäuse ausgebildet ist, das einen am Hals der Flasche montierten Sockel (2) enthält, und einer Ventilkappe, die eine am Hals der Flasche (13), um den Sockel (2) des Hahns herum, montierte Basiszone (C₁) und eine obere Zone in Form einer Schale (C₂) umfasst, die den bzw. das Hahn/Druckminderventil beherbergt und mindestens zwei seitliche Öffnungen zum Zugriff auf den bzw. das Hahn/Druckminderventil enthält und einen zentralen Knauf (T) zur Handhabung bildet.

2. Ausgerüstete Flasche nach Anspruch 1, **dadurch gekennzeichnet, dass** die obere Zone (C₂) der Kappe einen seitlichen Teil enthält, der einen Griff (P) bildet.

3. Ausgerüstete Flasche nach einem der Ansprüche 1 und 2, **dadurch gekennzeichnet, dass** die Kappe mindestens eine seitliche Öffnung enthält, die Zugriff auf ein Manometer (7, 8) des Hahns/-Druckminderventils gewährt.

4. Ausgerüstete Flasche nach einem der vorhergehenden Ansprüche, **dadurch gekennzeichnet, dass** die Kappe in mindestens zwei Teilen umgesetzt wird, die mittels Schrauben zusammengefügt werden.

5. Ausgerüstete Flasche nach Anspruch 4, **dadurch gekennzeichnet, dass** mindestens einer der Teile der Kappe aus Kunststoffmaterial ist.

6. Ausgerüstete Flasche nach einem der vorhergehenden Ansprüche, **dadurch gekennzeichnet, dass** die Kappe einen Schlitz (F) enthält, der einen Hebel (5) zur Betätigung des Ventils des Hahns/Druckminderventils aufnimmt.

## Claims

1. Gas bottle equipped with a tap/pressure-regulator assembly defining a gas circuit comprising, in series, a low-pressure circuit portion and a high-pressure circuit portion, which is formed in a body having a base (2) mounted on the neck of the bottle, and equipped with a tap shroud comprising a base region (C₁) mounted on the neck (13) of the bottle, around the base (2) of the tap, and a shell-shaped upper region (C₂) protecting the tap/pressure-regulator assembly and having at least two lateral openings for access to the tap/pressure-regulator assembly and forming a central handling pommel (T).

2. Bottle equipped according to Claim 1, **characterized in that** the upper region (C₂) of the shroud includes a lateral part forming a grip (P).

3. Bottle equipped according to either of Claims 1 and 2, **characterized in that** the shroud includes at least one lateral opening giving access to a pressure gauge (7, 8) of the tap/pressure-regulator assembly.

4. Bottle equipped according to one of the preceding claims, **characterized in that** the shroud is made of at least two parts joined together by screw means.

5. Bottle equipped according to Claim 4, **characterized in that** at least one of the parts of the shroud is made of plastic.

6. Bottle equipped according to one of the preceding claims, **characterized in that** the shroud includes a slot (F) that receives a lever (5) for actuating the valve of the tap/pressure-regulator assembly.
